# EUROPEAN PATENT APPLICATION

(11) **EP 4 625 683 A1**
(43) Date of publication of application: **01.10.2025**
(21) Application number: 24905093.1
(22) Date of filing: 18.10.2024
(51) Int. Cl.: H01M 50/59, H01M 50/588, H01M 10/04, H01M 50/502, H01M 50/507, H01M 50/211, H01M 50/178, H01M 50/503, H01M 50/517, H01M 50/531

(54) **BATTERY MODULE AND BATTERY PACK COMPRISING SAME**

(30) Priority: 26.12.2023 KR 20230190774
(71) Applicant: LG ENERGY SOLUTION, LTD., Seoul 07335 (KR)
(72) Inventor: Kong, Seungjin, Daejeon 34122 (KR); Lee, Borahm, Daejeon 34122 (KR); Han, Seungwon, Daejeon 34122 (KR)
(74) Representative: Plasseraud IP
(86) International application number: PCT/KR2024/015855
(87) International publication number: WO 2025/143477

(57) **Abstract**

A battery module includes a battery cell stack in which a plurality of battery cells is stacked, a module case for accommodating the battery cell stack, a busbar frame disposed on one side of the battery cell stack, one or more busbars disposed on the busbar frame, and a pad disposed on the busbar. The battery module relieves tension applied to electrode leads and prevents an electrode tab from breaking since the pad coupled to the busbar is compressed when a battery cell swells to cause the busbar to move.

## Description

### [TECHNICAL FIELD]

The present disclosure relates to a battery module and a battery pack including the same, and more specifically, to a battery module capable of relieving tension applied to a battery cell and a battery pack including the same.

### [BACKGROUND]

A secondary battery refers to a battery that can be charged and discharged, unlike a primary battery that cannot be charged, and is applied not only to portable devices but also to electric vehicles (EVs) and hybrid electric vehicles (HEVs) that are driven using an electric drive source.

Currently widely used types of secondary batteries include lithium ion batteries, lithium polymer batteries, nickel cadmium batteries, nickel hydrogen batteries, nickel zinc batteries, etc. The operating voltage of such a unit secondary battery cell, i.e., a unit battery cell, is approximately 2.5 V to 4.6 V. Therefore, when a higher output voltage is required, a battery pack is configured by connecting multiple battery cells in series. In addition, a battery pack is configured by connecting multiple battery cells in parallel depending on the charge/discharge capacity required for the battery pack. Therefore, the number of battery cells included in the battery pack can be set in various ways depending on the required output voltage or charge/discharge capacity.

When a battery pack is configured by connecting multiple battery cells in series/parallel, it is common to first configure a battery module composed of at least one battery cell, preferably multiple battery cells, and then use at least one battery module and add other components to configure the battery pack. Here, the battery module refers to a component in which multiple battery cells are connected in series or parallel, and the battery pack may refer to a component in which multiple battery modules are connected in series or parallel to increase capacity and output.

The battery module is configured by electrically connecting multiple cells using a busbar, and electrode leads of the battery cells are connected to the busbar.

However, as the lifespan limit of the battery module approaches, the amount of swelling of the internal cells increases, and the internal tabs of the cells connected to the cell leads may be pulled and broken.

### [TECHNICAL PROBLEMS]

An object of the present disclosure devised to solve the problems described above is to provide a battery module capable of alleviating tension applied to a battery cell and a battery pack including the same.

### [TECHNICAL SOLUTION]

A battery module according to an aspect of the present disclosure includes a battery cell stack in which a plurality of battery cells is stacked, a module case for accommodating the battery cell stack, a busbar frame disposed on one side of the battery cell stack, one or more busbars disposed on the busbar frame, and a pad disposed on the busbar.

Further, the pad is disposed on a rear side of the busbar facing the busbar frame.

Further, a plurality of pads is disposed on the busbar.

Further, the busbar frame includes one or more busbar mounting portions on which the busbar is mounted.

Further, the pad is disposed to face the busbar mounting portions.

Further, the pad is able to be compressed.

Further, the pad is a foam pad.

Further, one electrode lead of the battery cell and another electrode lead of the battery cell are respectively connected to both sides of a front side of the busbar.

Further, the pads are respectively disposed on both sides of the rear side of the busbar.

Further, the busbar includes a through hole in the center.

Further, the pads are respectively disposed on both sides of the through hole.

Further, the battery cell includes electrode tabs and electrode leads connected to the electrode tabs.

Further, the electrode leads are connected to the busbar.

Further, the battery module further includes an insulating cover disposed on the outside of the busbar frame.

Further, the battery module further includes an end plate disposed on the outside of the insulating cover.

### [ADVANTAGEOUS EFFECTS]

A battery module and a battery pack according to one aspect of the present disclosure have the effect of relieving tension applied to a battery cell.

### [BRIEF DESCRIPTION OF THE DRAWINGS]

FIG. 1 is a perspective view of a battery module according to an aspect of the present disclosure.
FIG. 2 is an exploded perspective view of the battery module according to an aspect of the present disclosure.
FIG. 3 is a perspective view of a battery cell according to an aspect of the present disclosure.
FIG. 4 is a perspective view of a terminal busbar according to an aspect of the present disclosure.
FIG. 5 is a perspective view of an insulating cover and an end plate according to an aspect of the present disclosure.
FIG. 6 is a detailed view of a busbar frame according to an aspect of the present disclosure.
FIG. 7 is a partial perspective view of a busbar frame to which electrode leads are coupled when cut horizontally according to an aspect of the present disclosure.
FIG. 8 is a diagram for describing relaxation of tension applied to a cell tab in FIG. 7.
FIG. 9 is a diagram illustrating a battery pack according to an aspect of the present disclosure.
FIG. 10 is a perspective view of a vehicle equipped with the battery pack according to an aspect of the present disclosure.

### [DETAILED DESCRIPTION]

The advantages and features of the present disclosure, and the methods for achieving the same will become clear with reference to the aspects described below in conjunction with the accompanying drawings. However, the present disclosure is not limited to the aspects disclosed below, but may rather be implemented in various different forms, and these aspects are provided only to make the present disclosure complete and to fully inform those skilled in the art of the scope of the disclosure, and the present disclosure is defined only by the scope of the claims. Accordingly, in some aspects, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

First, a battery module 1000 according to an aspect of the present disclosure will be described in detail with reference to the drawings.

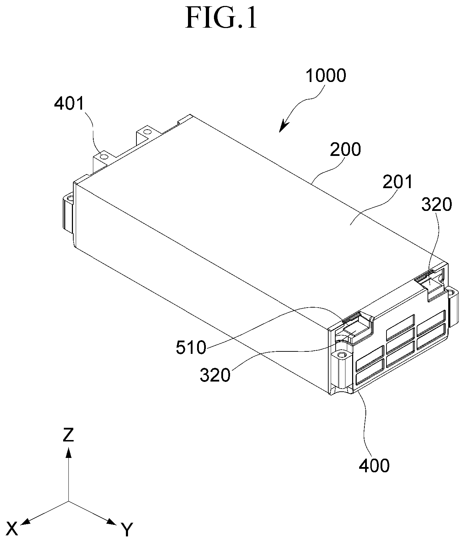

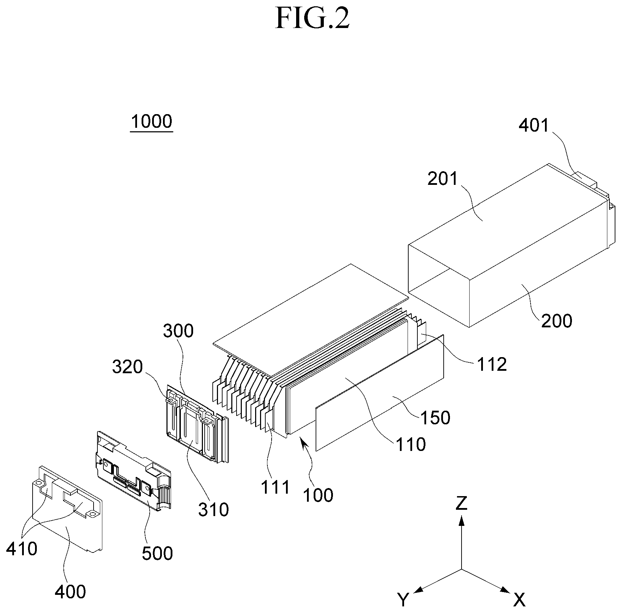

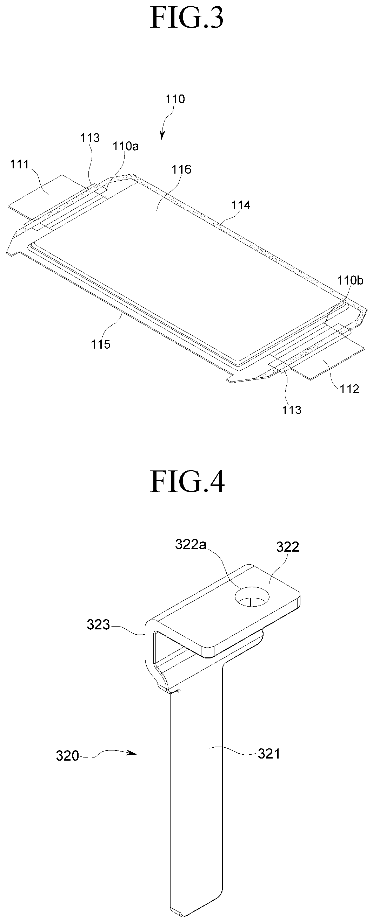

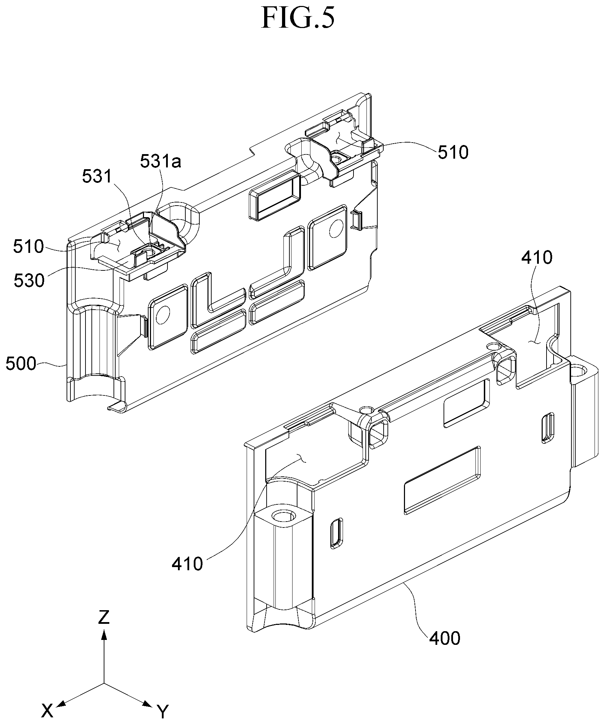

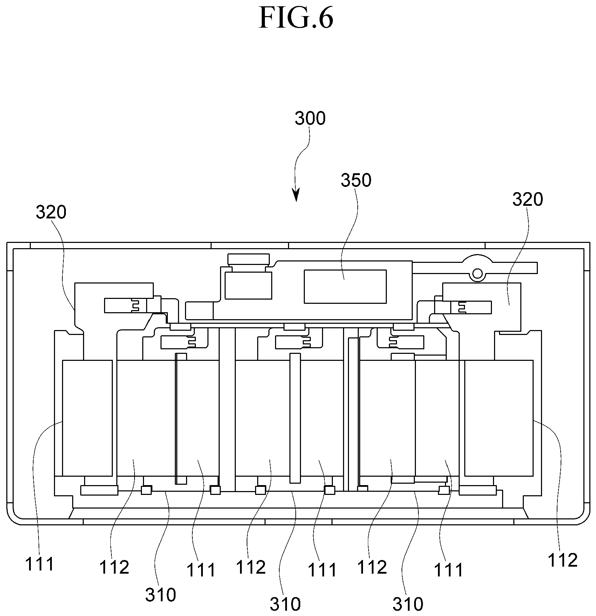

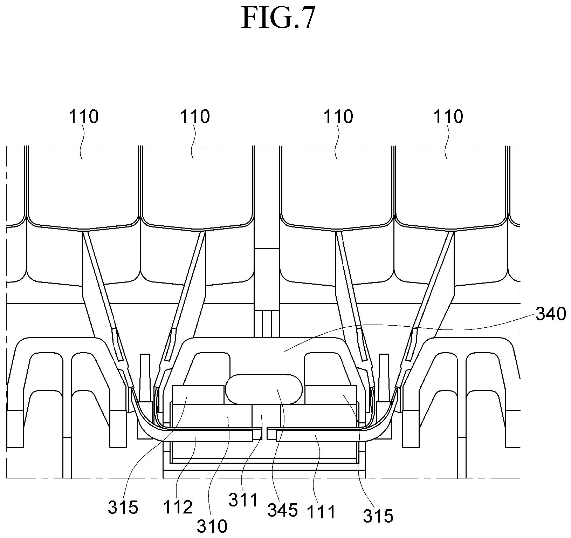

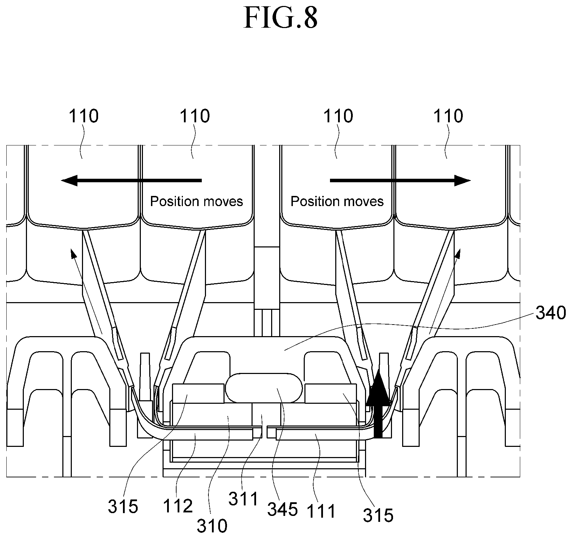

FIG. 1 is a perspective view of a battery module according to an aspect of the present disclosure, FIG. 2 is an exploded perspective view of the battery module according to an aspect of the present disclosure, FIG. 3 is a perspective view of a battery cell according to an aspect of the present disclosure, FIG. 4 is a perspective view of a terminal busbar according to an aspect of the present disclosure, FIG. 5 is a perspective view of an insulating cover and an end plate according to an aspect of the present disclosure, FIG. 6 is a detailed view of a busbar frame according to an aspect of the present disclosure, FIG. 7 is a partial perspective view of a busbar frame to which electrode leads are coupled when cut horizontally according to an aspect of the present disclosure, and FIG. 8 is a diagram for describing relaxation of tension applied to a cell tab in FIG. 7.

The battery module 1000 according to one aspect of the present disclosure may include a battery cell stack 100 in which a plurality of battery cells 110 is stacked, a module case 200 that accommodates the battery cell stack 100, a busbar frame 300 positioned on one side and/or the other side of the battery cell stack 100, an insulating cover 500 positioned on the outside of the busbar frame 300, and an end plate 400 positioned on the outside of the insulating cover 500.

The battery cell stack 100 may be formed by stacking the plurality of battery cells 110 in one direction, and the plurality of battery cells 110 may be electrically connected. The direction in which the plurality of battery cells 110 is stacked may be the X-axis direction (or -X-axis direction) in FIG. 2.

The direction from the front to the rear of the battery cell stack 100 or the opposite direction may be defined as the longitudinal direction of the battery cell stack 100 and may be the Y-axis direction in the figure. In addition, the direction from the upper surface to the lower surface of the battery cell stack 100 or the opposite direction may be defined as the width direction of the battery cell stack 100 and may be the Z-axis direction in the figure.

The longitudinal direction of the battery cell stack 100 may be substantially the same as the longitudinal direction of the battery cells 110. Electrode leads 111 and 112 of the battery cells 110 may be positioned on the front and rear sides of the battery cell stack 100, and busbars 310 and 320 of the battery module 1000 may be positioned close to the front and rear sides of the battery cell stack 100 to easily form electrical connections with the electrode leads 111 and 112.

The battery cell 110 may be provided as a pouch-type battery cell, and the number of battery cells stacked per unit area may be maximized in the case of the pouch-type battery cell. However, the battery cell 110 does not necessarily have to be provided in a pouch type, and may be provided in a square, cylindrical, or other various shapes.

The battery cell 110 provided in a pouch type may include an electrode assembly and a cell case 115 that accommodates the electrode assembly (refer to FIG. 3).

The cell case 115 of the battery cell 110 may be a pouch-type cell case 115 for accommodating the electrode assembly. The cell case 115 includes a lower case and an upper case that covers the lower case, and the upper and lower cases may be formed as one piece. In addition, as illustrated in FIG. 3, connecting portions of the upper and lower cases may be formed in a structure in which they are bent and folded. In addition, as illustrated, the upper case may completely cover the lower case, and a sealing portion 114 may be formed at the edge.

The upper and lower cases may both be formed in a laminate structure including an inner covering layer, a metal layer, and an outer covering layer. The inner covering layer is located on the inside of the cell case 115 based on the metal layer, and the inner covering layer needs to have insulation and electrolytic resistance since it is in direct contact with the electrode assembly, and in order to achieve sealing, a sealing area where the inner layers are thermally bonded is required to have excellent thermal bonding strength. The metal layer is located between the inner covering layer and the outer covering layer and corresponds to a barrier layer that prevents moisture or various gases from penetrating into the battery from the outside, and a preferable material for the metal layer in contact with the inner covering layer may be an aluminum (Al) thin film that is lightweight and has excellent formability. The outer covering layer is located on the outside of the cell case 115 based on the metal layer, and the outer covering layer can use a heat-resistant polymer that has excellent tensile strength, moisture permeability, and air permeability to protect the electrode assembly while ensuring heat resistance and chemical resistance, and for example, nylon or polyethylene terephthalate may be used for the outer covering layer.

A receiving groove 116 may be formed in the upper and lower cases, and the electrode assembly may be received in the receiving groove 116 of the upper and lower cases.

The electrode assembly accommodated in the cell case 115 may be one of a group consisting of a jelly-roll type electrode assembly having a structure in which a separator is interposed between long sheet-shaped positive and negative electrodes and then rolled up, a stack type electrode assembly composed of unit cells having a structure in which rectangular positive and negative electrodes are laminated with a separator interposed therebetween, a stack-folding type electrode assembly in which unit cells are rolled up by a long separator film, and a lamination-stack type electrode assembly in which unit cells are laminated with a separator interposed therebetween and attached to each other.

In addition, the electrode assembly may include two electrode tabs 110a and 110b and two electrode leads 111 and 112 respectively connected to the two electrode tabs 110a and 110b by welding.

One of the two electrode leads 111 and 112 may be a positive lead connected to the positive tab 110a, and the other may be a negative lead connected to the negative tab 110b. For example, the positive electrode lead 111 may be made of aluminum (Al), and the negative electrode lead 112 may be made of copper (Cu).

A lead film 113 may be attached to each of the electrode leads 111 and 112. The lead film 113 coupled to the electrode leads 111 and 112 is positioned between the electrode leads 111 and 112 and the cell case 115 to prevent a short circuit from occurring between the electrode leads 111 and 112 and the cell case 115 and to improve sealing power, thereby preventing leakage of the electrolyte, and the like.

The two electrode leads 111 and 112 are illustrated as being respectively positioned on both sides of the electrode assembly, but may be positioned on only one side of the electrode assembly depending on the arrangement of the electrode tabs.

The module case 200 may be for protecting the battery cell stack 100 and electrical components connected thereto from external physical impact, and the module case 200 may accommodate the battery cell stack 100 and the electrical components connected thereto in the internal space thereof.

The module case 200 may have various structures, and for example, the module case 200 may have a mono-frame structure. Here, a mono-frame may be in the form of a metal plate in which the upper surface, the lower surface, and both side surfaces are integrated. The mono-frame may be manufactured by extrusion molding. As another example, the module case 200 may have a structure in which a U-shaped frame and an upper plate (upper surface 201) are combined. In the case of a structure in which a U-shaped frame and an upper plate are combined, the structure of the module case 200 may be formed by combining the upper plate on the upper side of the U-shaped frame, which is a metal plate in which the lower side and both sides are combined or integrated, and each frame or plate may be manufactured by press molding. In addition, the module case 200 may have an L-shaped frame structure in addition to a mono-frame or a U-shaped frame, and may be provided as in various structures not described in the above-described examples.

The structure of the module case 200 may be provided in an open form in the longitudinal direction of the battery cell stack 100. The front and rear sides of the battery cell stack 100 may not be covered by the module case 200. The electrode leads 111 and 112 of the battery cells 110 may not be covered by the module case 200. The front and rear of the battery cell stack 100 may be covered by the busbar frame 300, the end plate 400, or the busbars 310 and 320 which will be described later, and accordingly, the front and rear of the battery cell stack 100 can be protected from external physical impacts and the like.

A compression pad 150 may be positioned between the battery cell stack 100 and one side of the inner surface of the module case 200.

The compression pad 150 may be disposed to face the battery cell 110 positioned at the outermost side of the battery cell stack 100 in the X-axis direction in the figure.

Further, although not shown, a thermally conductive resin may be injected between the battery cell stack 100 and the inner surface of the module case 200, and a thermally conductive resin layer (not shown) may be formed between the battery cell stack 100 and one side of the inner surface of the module case 200 by the injected thermally conductive resin. Here, the thermally conductive resin layer may be positioned on the Z-axis of the battery cell stack 100, and the thermally conductive resin layer may be formed between the battery cell stack 100 and the bottom surface positioned on the -Z-axis of the module case 200.

The busbar frame 300 may be positioned on one side of the battery cell stack 100 and may cover one side of the battery cell stack 100 while guiding connection between the battery cell stack 100 and an external device. Specifically, the busbar frame 300 may be positioned on the front or rear of the battery cell stack 100 as illustrated, or may also be positioned on the upper surface, lower surface, or side surface. At least one of the busbars 310 and 320 and a module connector may be mounted on the busbar frame 300. As illustrated in FIG. 2, one side of the busbar frame 300 may be connected to one side or the other side of the battery cell stack 100, and the other side of the busbar frame 300 may be connected to the busbars 310 and 320.

The busbar frame 300 may include one or more busbar mounting portions 340 on which the busbars 310 and 320 are coupled and mounted, and one or more ribs (refer to FIGS. 7 and 8).

The busbars 310 and 320 may be mounted on the front of the busbar mounting portion 340 of the busbar frame 300, and a plurality of busbar mounting portions 340 may be disposed to be spaced apart in the width direction of the battery module 1000.

The rib may be configured to connect two busbar mounting portions 340 between adjacent busbar mounting portions 340. The rib may be disposed between two adjacent busbar mounting portions 340 to improve the rigidity of the busbar frame 300.

The busbar frame 300 may be made of an electrically insulating material or may include an insulating material. The busbar frame 300 may restrict the busbars 310 and 320 from contacting other portions of the battery cells 110 other than the portion where the busbars are connected to the electrode leads 111 and 112, and may prevent an electrical short circuit from occurring.

The busbar frame 300 may be positioned on one side and the other side of the battery cell stack 100.

FIG. 6 is a diagram illustrating the busbar frame 300 according to an aspect of the present disclosure. The busbars 310 and 320 may be mounted on one side of the busbar frame 300, and the busbars 310 and 320 may be for electrically connecting the battery cell stack 100 or the battery cells 110 and an external device circuit. A plurality of busbars 310 and 320 may be disposed and may be positioned between the battery cell stack 100 or the busbar frame 300 and the end plate 400, thereby protecting the battery cell stack 100 or the busbar frame 300 from external impacts and minimizing deterioration of durability due to external moisture and the like.

The busbar frame 300 may include a busbar frame fixing hole 345 as illustrated in FIG. 7. At the time of welding the electrode leads 111 and 112 and the busbars 310 and 320, a jig pin (not shown) may be inserted into the busbar frame fixing hole 345 to temporarily support the busbars 310 and 320 and prevent movement. After welding, the jig pin (not shown) can be removed from the busbar frame fixing hole 345. The busbar frame fixing hole 345 may be disposed in the busbar mounting portion 340, and pads 315 may be disposed on both sides of the busbar frame fixing hole 345 at the rear of the busbars 310 and 320.

The busbars 310 and 320 may be electrically connected to the battery cell stack 100 through the electrode leads 111 and 112 of the battery cells 110.

Specifically, the electrode leads 111 and 112 of the battery cells 110 may be bent after passing through a lead slit formed in the busbar frame 300 and connected to the busbars 310 and 320. The electrode leads 111 and 112 of the battery cells 110 may be connected to the busbars 310 and 320 by welding.

The busbars 310 may be for electrically connecting the battery cells 110, and as illustrated in FIGS. 6 and 7, the electrode leads 111 and 112 of the battery cells 110 may be connected to the left and right sides of one surface of the busbar 310, and the electrode lead 111 connected to one side of the busbars 310 and 320 may be a positive lead, and the electrode lead 112 connected to the other side of the busbars 310 and 320 may be a negative lead. The battery cells 110 constituting the battery cell stack 100 may be connected in series or in parallel by the busbars 310 and 320.

The busbars 310 and 320 may be connected to the connector 350, and the connector 350 may be connected to a sensing part (sensing plate) (not shown) that can perform functions such as voltage sensing of the battery cells 110.

In the present aspect, the busbars 310 and 320 may include the pad 315.

As illustrated in FIG. 7, the pad 315 may be disposed on the rear sides of the busbars 310 and 320, that is, on the rear sides facing the busbar mounting portion 340 from the busbars 310 and 320. In addition, the pad 315 may be attached to the rear sides of the busbars 310 and 320 and may be in close contact with the busbar mounting portion 340, and the pad 315 may be compressed.

A plurality of pads 315 may be disposed to be spaced apart from each other on a single busbar 310 and 320, and the plurality of pads 315 may be disposed to be spaced apart in the width direction (X-axis direction) of the battery module 1000. For example, the pads 315 may be respectively disposed on the rear area of one side of the busbar 310 and 320 to which the positive electrode lead 111 is connected and on the rear area of the other side of the busbar 310 and 320 to which the negative electrode lead 112 is connected. The busbar 310 may have a through hole 311 extending vertically formed in the center thereof, and the pads 315 may be disposed on both sides of the through hole 311.

The pads 315 may be made of a foam pad, may be made of a synthetic resin foam, and may be made of, for example, urethane foam.

Each pad 315 may be extended in the vertical direction, and the vertical length of the pad 315 may be less than that of the busbars 310 and 320. The pad 315 is illustrated as having a rectangular cross-section on a plane, but is not limited thereto and may have a cross-section in a different shape.

FIG. 8 is a diagram for describing relaxation of tension applied to a battery tab in FIG. 7, and as the lifespan limit of the battery module 1000 approaches, the amount of swelling of the internal cells increases. As the battery cells 110 swell, the electrode leads 111 and 112 of the battery cells 110 are pulled toward the battery cells 110, as illustrated, and thereby the pads 315 coupled to the rear surfaces of the busbars 310 and 320 are compressed on the busbar mounting portion 340, causing the busbars 310 and 320 to move toward the busbar mounting portion 340 (or toward the battery cells 110) to relieve the tension of the electrode leads 111 and 112 and the electrode tabs 110a and 110b. When the busbars 310 and 320 are fixed to the busbar mounting portion 340, the electrode tabs 110a and 110b connected to the electrode leads 111 and 112 may be pulled and broken due to swelling of the battery cells 110.

In one aspect of the present disclosure, as described above, even if the electrode leads 111 and 112 and the electrode tabs 110a and 110b are pulled as the battery cells 110 swell, the pads 315 coupled to the rear surfaces of the busbars 310 and 320 are compressed, causing the busbars 310 and 320 to move, thereby relieving the tension of the electrode leads 111 and 112 and preventing the electrode tabs 110a and 110b from breaking.

The busbars 310 and 320 may include a terminal busbar 320 for electrically connecting one battery module 1000 to another battery module 1000.

At least a part of the terminal busbar 320 may be exposed to the outside of the end plate 400 to be connected to another battery module 1000, and the end plate 400 may include a terminal opening 410 for this purpose.

The terminal busbar 320 may have one end (second portion 322) exposed through an opening 510 of the insulating cover 500 and the terminal opening 410 of the end plate 400.

As illustrated in FIG. 4, the terminal busbar 320 may include a first portion 321 connected to the electrode leads 111 and 112 of the battery cell 110 and the second portion 322 exposed to the outside through the terminal opening 410. In addition, the terminal busbar 320 may further include a bent portion 323 formed between the first portion 321 and the second portion 322.

In the terminal busbar 320, the first portion 321 may be connected to the second portion 322 through the bent portion 323, and one side of the first portion 321 and one side of the second portion 322 may be perpendicular to each other. That is, by forming the bent portion 323 in the terminal busbar 320, the second portion 322 may protrude and be mounted on a mounting portion 530 of the insulating cover 500, and the second portion 322 may be electrically connected to a pack busbar (not shown). A joining hole 322a is formed in the second portion 322 constituting one end of the terminal busbar 320, and the second portion 322 of the terminal busbar 320 is fixed by a fixing pin (not shown) inserted into the joining hole 322a.

The terminal busbar 320 may also include a pad 315 like the busbar 310 described above, and the pad 315 may be disposed on the rear side of the terminal busbar 320 (the rear side facing the busbar mounting portion 340).

In the present aspect, two terminal busbars 320 may be disposed on both sides of the busbar frame 300 as shown in FIG. 6.

One of the two terminal busbars 320 may be a positive (+) terminal busbar 320, and the other may be a negative (-) terminal busbar 320.

In FIG. 4, the electrode leads 111 and 112 may be bonded to the first portion 321 of the terminal busbar 320 by welding.

The end plate 400 may be intended to protect the battery cell stack 100 and the electrical components connected thereto from external physical impact by covering the open surface of the module case 200. To this end, the end plate 400 may be manufactured from a material having a predetermined strength, and for example, the end plate 400 may include a metal such as aluminum or a plastic material.

The terminal opening 410 may be formed in the end plate 400. The terminal opening 410 may be disposed on each of both sides of the end plate 400, and a part of the insulating cover 500 and one end (the second portion 322) of the terminal busbar 320 may be exposed through the terminal openings 410.

In addition, a connector opening may be positioned between the terminal openings 410 disposed on both sides of the end plate 400, and the module connector may be exposed to the outside through the connector opening.

The end plate 400 may be combined with the module case 200 while covering the busbar frame 300 or the busbars 310 and 320 located on one side of the battery cell stack 100. Each corner of the end plate 400 may be combined with the corresponding corner of the module case 200 by welding, bolt fastening, hook fastening, or the like.

The end plate 400 may be positioned on one side and the other side of the module case 200 to cover both sides of the battery cell stack 100. In the present aspect, an example in which the end plate 400 is positioned on the front and rear sides of the module case 200 is illustrated.

The insulating cover 500 may be positioned on the inside of the end plate 400 and on the outside of the busbar frame 300. In addition, the insulating cover 500 for electrical insulation may be positioned between the end plate 400 and the busbar frame 300. That is, the busbar frame 300, the insulating cover 500, and the end plate 400 may be sequentially positioned from the battery cell stack 100 to the outside. Like the end plate 400, a plurality of busbar frames 300 and a plurality of insulating covers 500 may be provided.

The insulating cover 500 may be made of an electrically insulating material or may include an insulating material and can block the busbars 310 and 320 from contacting the end plate 400.

The insulating cover 500 may include the opening 510 and a mounting portion 530. The opening 510 may be disposed on each of the upper sides of the insulating cover 500, and one end (the second portion 322) of the terminal busbar 320 can be exposed through the opening 510.

In addition, a connector opening may be positioned between the openings 510 disposed on both sides of the insulating cover 500, and the module connector may be exposed to the outside through the connector opening.

The insulating cover 500 may be located on the inner surface of the end plate 400, and may be in close contact with the inner surface of the end plate 400, but the present disclosure is not limited thereto.

As described above, one end (the second portion 322) of the terminal busbar 320 can be exposed through the opening 510, and the exposed one end (the second portion 322) of the terminal busbar 320 can be mounted on the mounting portion 530. Accordingly, the mounting portion 530 can be disposed to be adjacent to the opening 510 and can be positioned on the upper outer surface.

The second portion 322 of the terminal busbar 320 can be mounted on the upper surface of the mounting portion 530, and thus the upper surface of the mounting portion 530 can form a mounting surface. In addition, as illustrated in FIG. 5, the mounting portion 530 may include a fixing member 531 for fixing the terminal busbar 320.

The fixing member 531 may fix the second portion 322 of the terminal busbar 320 and may include a fixing hole 531a.

A fixing pin (not shown) can be inserted into the fixing hole 531a. The fixing pin (not shown) inserted into the joining hole 322a formed in the second portion 322 of the terminal busbar 320 is fixed by being coupled to the fixing hole 531a, and thus the second portion 322 of the terminal busbar 320 can be fixed to the insulating cover 500.

Therefore, the second portion 322 of the terminal busbar 320 is mounted on the mounting portion 530 of the insulating cover 500 and mounted on and comes into contact with the fixing member 531 disposed in the mounting portion 530.

In addition, a terminal cover (not shown) covering the exposed one end (the second portion 322) of the terminal busbar 320 may be disposed on the insulating cover 500.

Incidentally, electrical connection between battery modules 1000 may be made through a pack busbar (not shown). The pack busbar is a member for connecting one battery module 1000 to another adjacent battery module 1000 or a battery disconnection unit (BDU), and may be connected to the exposed one end (second portion 322) of the terminal busbar 320. For example, the pack busbar may be connected by overlapping one end (second portion 322) of the terminal busbar 320.

After one end of the pack busbar is disposed to overlap the second portion 322 of the terminal busbar 320, the fixing pin is sequentially inserted into a joining hole of the pack busbar and the joining hole 322a of the second portion 322 of the terminal busbar 320, and then the fixing pin is fixed to the fixing hole 531a of the mounting portion 530, and thus the pack busbar can be connected to the terminal busbar 320.

Then, the second portion 322 of the terminal busbar 320 can be fixed to the insulating cover 500 along with the pack busbar by the fixing pin.

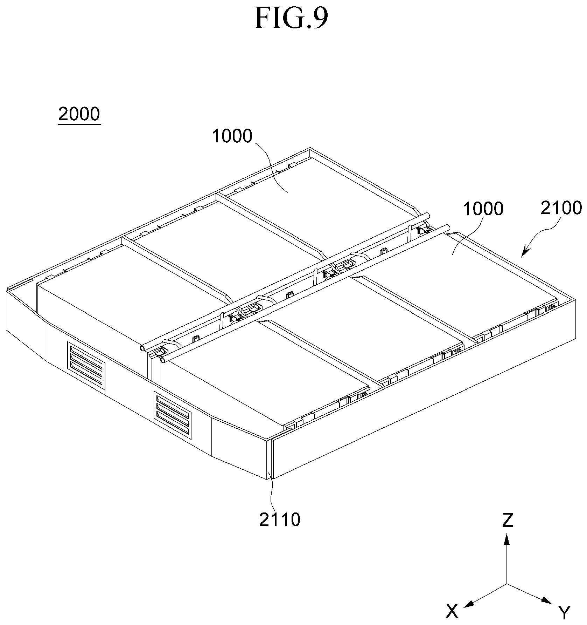

One or more battery modules 1000 according to the present disclosure as described above can form a battery pack 2000. As illustrated in FIG. 9, the battery pack 2000 according to an aspect of the present disclosure may accommodate at least one battery module 1000 inside a pack case 2100, and may include various control and protection systems such as a battery management system (BMS), a cooling system, etc.

The pack case 2100 may include a lower housing 2110 and an upper housing (not shown) coupled to the upper side of the lower housing 2110, and a plurality of battery modules 1000 may be accommodated in the internal space of the lower housing 2110 and the upper housing.

Although an example in which a plurality of battery modules 1000 is accommodated inside the battery pack 2000 is illustrated in the aspect of the present disclosure, a plurality of battery cells 110 may be directly disposed inside the battery pack 2000.

The battery module 1000 and the battery pack 2000 according to the present disclosure configured in this manner may be applied to various devices. Specifically, they can be applied to means of transportation such as electric bicycles, electric vehicles, hybrid vehicles, and an energy storage system (ESS), but the battery module 1000 and the battery pack 2000 are not limited thereto and can be applied to various devices that can use secondary batteries.

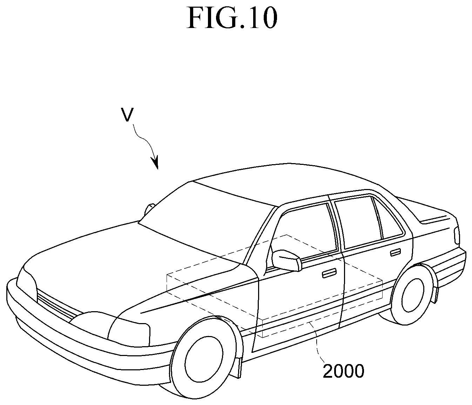

FIG. 10 is a diagram illustrating an electric vehicle (V) equipped with the battery pack 2000. The electric vehicle V can be driven in such a manner that wheels are driven by a motor that receives power from the battery pack 2000.

The present disclosure has been described with reference to preferred aspects as described above, but is not limited to the above aspects, and various changes and modifications may be made by those skilled in the art within the scope that does not depart from the spirit of the present disclosure.

### [INDUSTRIAL APPLICABILITY]

The present disclosure can provide a battery module and a battery pack that can relieve tension applied to a battery cell.

## Claims

1. A battery module, comprising:
a battery cell stack in which a plurality of battery cells is stacked;
a module case for accommodating the battery cell stack;
a busbar frame disposed on one side of the battery cell stack;
one or more busbars disposed on the busbar frame; and
a pad disposed on a busbar of the one or more busbars.

2. The battery module of claim 1, wherein the pad is disposed on a rear side of the busbar facing the busbar frame.

3. The battery module of claim 2, wherein a plurality of pads is disposed on the busbar.

4. The battery module of claim 1, wherein the busbar frame includes a busbar mounting portion on which the busbar is mounted.

5. The battery module of claim 4, wherein the pad is disposed to face the busbar mounting portion.

6. The battery module of claim 1, wherein the pad is compressible.

7. The battery module of claim 1, wherein the pad is a foam pad.

8. The battery module of claim 1, wherein one electrode lead of the battery cell and another electrode lead of the battery cell are respectively connected to both sides of a front side of the busbar.

9. The battery module of claim 8, wherein one or more pads are disposed on both sides of a rear side of the busbar.

10. The battery module of claim 1, wherein the busbar includes a through hole at a center thereof.

11. The battery module of claim 10, wherein one or more pads are disposed on both sides of the through hole.

12. The battery module of claim 1, wherein the battery cell comprises electrode tabs and electrode leads connected to the electrode tabs.

13. The battery module of claim 12, wherein the electrode leads are connected to the busbar.

14. The battery module of claim 1, further comprising an insulating cover disposed on an outside of the busbar frame.

15. The battery module of claim 14, further comprising an end plate disposed on an outside of the insulating cover.
